# EUROPÄISCHE PATENTSCHRIFT

(11) **EP 3 541 317 B1**
(45) Veröffentlichungstag und Bekanntmachung des Hinweises auf die Patenterteilung: **28.09.2022**
(21) Anmeldenummer: 17804668.6
(22) Anmeldetag: 16.11.2017
(51) Int. Cl.: A61C 5/00

(54) **DREIDIMENSIONALER KIEFERORTHOPÄDISCHER RETAINER UND VERFAHREN ZUR HERSTELLUNG EINES DREIDIMENSIONALEN KIEFERORTHOPÄDISCHEN RETAINERS**
THREE-DIMENSIONAL ORTHODONTIC RETAINER AND METHOD FOR PRODUCING A THREE-DIMENSIONAL ORTHODONTIC RETAINER
CONTENTION ORTHODONTIQUE TRIDIMENSIONNELLE ET PROCÉDÉ POUR LA FABRICATION D'UNE CONTENTION ORTHODONTIQUE TRIDIMENTIONNELLE

(30) Priorität: 21.11.2016 CH 15322016
(43) Veröffentlichungstag der Anmeldung: 25.09.2019
(73) Patentinhaber: Hostettler, Jürg, 4950 Huttwil (CH); Hostettler, Jonas, 4950 Huttwil (CH)
(72) Erfinder: Hostettler, Jürg, 4950 Huttwil (CH); Hostettler, Jonas, 4950 Huttwil (CH)
(74) Vertreter: Kieffer, Valentin
(86) Internationale Anmeldenummer: PCT/IB2017/057161
(87) Internationale Veröffentlichungsnummer: WO 2018/092052

(56) Entgegenhaltungen:
- WO-A1-2014/008583
- CN-A- 101 559 006

## Beschreibung

Die vorliegende Erfindung betrifft einen dreidimensionalen kieferorthopädischen Retainer gemäss Oberbegriff des Patentanspruchs 1, sowie das Verfahren zur Herstellung eines dreidimensionalen kieferorthopädischen Retainers gemäss Patentanspruch 6 oder 9.

Kieferorthopädische Retainer sind im Stand der Technik bestens bekannt. Sie werden häufig nach Abschluss einer kieferorthopädischen Behandlung eingesetzt, um die Zähne weiterhin in der richtigen Position zu fixieren, und dienen zur Stabilisierung der Position dieser Zähne. Ein Retainer ist meist eine länglich geformte Stange aus Metall, oft aus einem Draht, wobei zwei oder mehrere benachbarte Zähne miteinander verbunden werden, wie beispielsweise in DE 20202004419 U1 dargestellt. Eine wesentliche Anforderung an den Retainer ist die bestmögliche Anpassung an die Form der anliegenden Zähne. Einerseits besteht mit einer ungenau geformten Stange die Gefahr, dass sie bei der Befestigung des Retainer an den Zähnen elastisch gebogen wird. Jede Biegung der Stange aus ihrer Ruheposition führt zu einer mechanischen Belastung und daher evtl. zu einer unerwünschten Bewegung der Zähne. Ein weiterer Effekt einer solchen Biegung ist eine permanente Spannung, welche bei einer Bewegung des Kiefers und der Zähne dazu führen kann, dass der Retainer sich löst oder bricht und ersetzt werden muss. Andererseits ist es für die Bequemlichkeit des Trägers des Retainer besonders wichtig, dass die Stange von den Zähnen so wenig wie möglich vorsteht und auf der gesamten Länge möglichst eng anliegt. Herkömmliche kieferorthopädische Retainer bestehen aus einem einfachen oder mehrfach gefederten geflochtenen Draht, der vom Zahntechniker manuell umgebogen und an die individuelle Form des Gebisses des Patienten angepasst wird. Dies ist eine aufwändige Arbeit, die
selbst bei sorgfältiger Bearbeitung durch erfahrene Zahntechniker meist nur mit einer beschränkten Präzision gemacht werden kann. Insbesondere kann der Draht nicht sehr präzise in die Zahnzwischenräume gebogen werden, da er sonst evtl. bricht. Erschwerend kommt hinzu, dass jede plastische Verformung des Drahts Eigenspannungen und nano- bzw. mikroskopische strukturelle Defekte und Mikro-Risse im Material erzeugt, die das Material schwächen und zum vorzeitigen Versagen des Retainer führen können. Zwar kann eine Wärmebehandlung zur Auflösung dieser Defekte angewendet werden, aber dies stellt einen zusätzlichen Zeit- und Energieaufwand da und es wird unter Umständen eine weitere Maschine dazu benötigt. Ausserdem kann auch eine solche Wärmebehandlung den ursprünglichen Zustand des Materials vor der Verformung nur annäherungsweise wiederherstellen. In der US 2004/0072120 wird ein Verfahren zur Herstellung eines kieferorthopädischen Retainer beschrieben, wobei dreidimensionale intraorale Strukturen unter Benutzung einer Scanvorrichtung erfasst werden. Die erfassten Daten werden dann in ein 3D-CAD-Modell überführt, auf dessen Basis eine konturgenaue Stange entworfen und mittels einer Draht-Biegemaschine hergestellt wird. Obwohl mit dieser computergesteuerten Methode eine hohe Passgenauigkeit des Retainers erreicht wird, werden die Nachteile der plastischen Verformung des Materials nicht beseitigt. In der WO 2014140013 wird ein anderes Verfahren zur Herstellung eines kieferorthopädischen Retainer bekannt gemacht, wobei intraorale Strukturen mit Scanvorrichtungen ebenfalls zur Erstellung eines 3D-Modells des Gebisses erfasst werden. Um den Retainer herzustellen, ist vorgesehen, diesen aus einem Blech aus Metall mittels Laserscheiden oder Drahterosion herauszuschneiden. Dabei ist zu bemerken, dass mindestens eine der Seiten des erhaltenen Retainer einer ursprünglichen Blechebene entspricht. Aus einem flachen Blech können also nur Retainer mit flachen Seiten hergestellt werden. Dies ist sowohl für die Funktion des Retainer als auch für die Bequemlichkeit des Trägers nicht optimal. Erstens können die Kanten, welche durch das Schneiden im Blech entstehen, hervorstehen und müssen dann noch nachbearbeitet und abgeschliffen werden. Zweitens ist es ideal, wenn die Stange auf einer bestimmten Höhe zwischen der Basis und dem oberen Ende des Zahnschmelzes befestigt ist, wobei diese Höhe bei jedem Zahn unterschiedlich ist und somit nicht auf der selben Ebene liegt. Zum Beispiel ist es von Vorteil, wenn die Stange möglichst wenig von Zahn vorsteht, damit diese den Träger möglichst nicht stört. Dies kann erreicht werden, wenn sie entlang der lokalen Vertiefungen der Oberfläche des jeweiligen Zahns laufen kann, und sicher nicht über den hervorstehenden Zonen. Ausserdem sollten okklusale Kontaktpunkte vom Retainer möglichst vermieden werden um zu vermeiden, dass man auf den Retainer beisst. Auch bei den Schneide- und Eckzahnen muss vermieden werden, dass der Retainer dem Zahnkontakt zwischen den Oberkieferzähnen und den Unterkieferzähnen in die Quere kommt. Auch Kiefergrenzbewegungen sollen berücksichtigt werden, um sicherzustellen, dass der Retainer idealerweise keine physikalisch mögliche Bewegung des Gebisses stören kann. Die entsprechenden Kontaktpunkte müssen vom Retainer also so gut wie möglich umgegangen werden. Da sich die günstigsten Stellen zur Anordnung der Stange nie auf derselben Ebene finden, ist ein planarer Retainer aus einem Blech also nicht optimal. Viel vorteilhafter ist es, wenn der Retainer in allen drei Dimensionen gestaltet wird, so dass er an die Oberfläche der Zähne in allen Richtungen optimal angepasst werden kann. Aus diesem Grund wurde in der WO 2014140013 zusätzlich vorgesehen, den Retainer aus einem gekrümmten Blech herauszuschneiden, damit der Retainer in drei Dimensionen gestaltet wird. Die vorgängige Biegung des Blechs stellt allerdings ein zusätzlicher Verfahrensschritt dar, wozu eine zusätzliche Maschine benötigt wird, und für das Schneiden aus einem gekrümmten Blech muss ebenfalls ein spezifisches Verfahren eingesetzt werden. Ausserdem taucht mit der vorgängigen Biegung des Blechs wiederum die Problematik der Schwächung des Materials bei Verformung des Materials auf.

In der WO2014008583A1 wird ein herausnehmbarer kieferorthopädischer Retainer offenbart, der ausschliesslich durch eine Hinterschneidung im Bereich des Zahns, in dem sich Zahnfleisch und Parodontium treffen, gehalten wird, sowie eine Methode für dessen Herstellung.

In der CN101559006A wird ein Verfahren zur Herstellung eines kundenspezifischen kieferorthopädischen Retainers durch selektives Laserschmelzen offenbart.

In der US4516938A wird ein klebbarer kieferorthopädischer Retainer offenbart, mit einer Vielzahl von Klebepads oder Basen, die durch Stegelemente oder Verbindungen miteinander verbunden sind, sowie eine Methode für dessen Herstellung.

In der DE102013204359A1 wird ein kieferorthopädischer Retainer offenbart, umfassend mindestens einen lang gestreckten Bogen, wobei der Bogen lokal an eine Oberflächenkontur eines jeweilig anliegenden Zahns individuell angepasst ist. Der Retainer ist lokal derart ausgeformt, dass er in mindestens einen zwischen zwei benachbarten Zähnen befindlichen Zahnzwischenraum zumindest teilweise hineinragt, so dass eine in Längsrichtung des Retainers gerichtete Relativbewegung zwischen dem Retainer und den Zähnen selbst dann blockiert ist, wenn der Retainer in einem unverbundenen Zustand an den Zähnen anliegt.

Im Artikel «CAD/CAM-gefertigte Lingualretainer aus Nitinol» (Pascal Schumacher, 30. August 2015, https://www.zmk-aktuell.de/fachgebiete/cadcam/story/cadcam-gefertigte-lingualretainer-aus-nitinol_1279.html) werden die Vorteile von computergefertigten Lingualretainers gegenüber der herkömmlichen Technik diskutiert.

In der DE10245008A1 wird ein Lingual-Retainer vorestellt, welcher an seinen beiden Enden eine grössere Fläche zur Klebeverbindung mit den Zähnen eines Patienten ausfweist.

In der US8741050B2 wird ein Verfahren zur Herstellung von Dentalartikeln durch Sintern von Keramikpulver offenbart.

https://www.ztm-aktuell.de/technik/kfo/story/kfo-retainer-aus-dem-cadcam_4104.html offenbart einen CAD/CAM-Retainer mit einem halbrunden Profil.

Der vorliegenden Erfindung liegt die Aufgabe zugrunde, einen dreidimensionalen kieferorthopädischen Retainer bereitzustellen und das Verfahren zur Herstellung eines dreidimensionalen kieferorthopädischen Retainers derart zu verbessern, dass die Vorteile der bekannten Retainer und Verfahren zu deren Herstellung erhalten bleiben, wobei das Ausgangsmaterial des dreidimensionalen kieferorthopädischen Retainers ohne Verformung oder sonstige Veränderung der Materialeigenschaften direkt in die gewünschte Endform ausarbeitet wird. Gleichzeitig soll der Retainer die Kieferfunktionen wie Essen, Lachen, sowie die Ästhetik der Zähne möglichst nicht beeinflussen.

Diese Aufgabe lösen ein dreidimensionaler kieferorthopädischer Retainer gemäss Patentanspruch 1 und ein Verfahren zur Herstellung eines dreidimensionalen kieferorthopädischen Retainers mit den Merkmalen der Ansprüche 6 oder 9. Weitere Merkmale und Ausführungsbeispiele gehen aus den abhängigen Ansprüchen hervor und deren Vorteile sind in der nachfolgenden Beschreibung erläutert.

In der Zeichnung zeigt:
- Figur 1: Rohstück
- Figur 2a-b: gefertigter dreidimensionaler kieferorthopädische Retainer, am Oberkiefer
- Figur 3a: Halbrundes Profil des Retainers
- Figur 3b: Retainer mit länglichem, zulaufendem Profil
- Figur 4a: Retainer mit Befestigungselementen
- Figur 4b: Retainer mit fantasievollen Befestigungselementen
- Figur 5: Verfahrensablauf
- Figur 6: Dreidimensionaler kieferorthopädischer Retainer im Rohstück ausgearbeitet

Zur Herstellung eines erfindungsgemässen dreidimensionalen kieferorthopädischen Retainers (2) wird als Ausgangsmaterial ein biokompatibles Material bevorzugt, welches zudem möglichst keine Allergene enthält. Geeignet sind z.B. Metall, Metalllegierungen wie beispielsweise Ti-Mo oder Ti-6AL-4V (Titan Grad 5 ELI, in der Medizintechnik benutzt), Keramische Stoffe (z.B. Zirkon), Kunststoffe oder eine beliebige Kombination solcher Materialien. Um Probleme beim Träger zu vermeiden, könnte zudem darauf geachtet werden, dass das Ausgangsmaterial nicht Stoffe wie z.B. Nickel enthält, welche bekanntermassen zu allergischen Reaktionen führen können. Der vorliegende Retainer (2) wird aus einem Rohmaterial (1) hergestellt, welches beispielsweise in Form eines Rohstücks (1) vorliegen kann. Das Rohstück (1) kann jede beliebige Form aufweisen, solange es gross genug ist, um daraus einen Retainer (2) herauszuarbeiten.

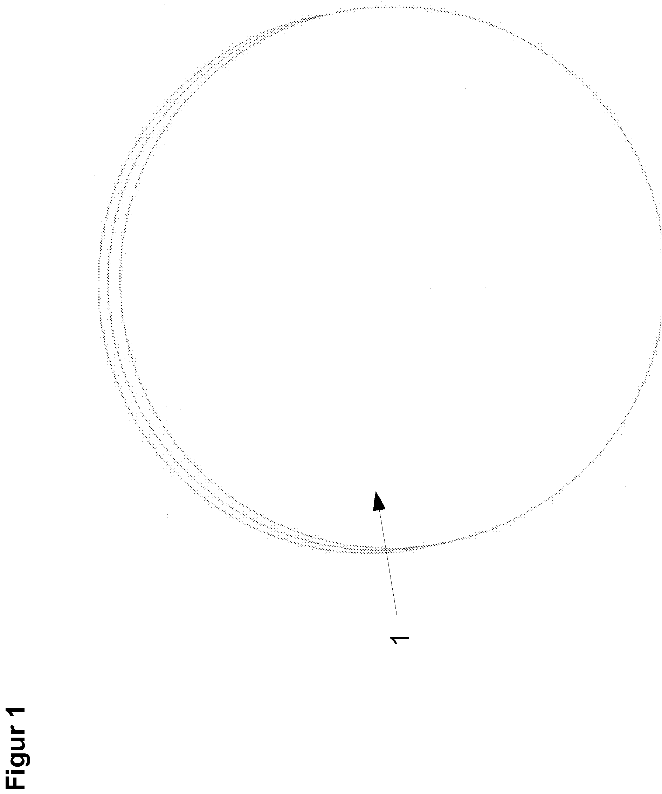

Es braucht keine bestehende Oberfläche des Rohstücks (1) einer Seite des herausgearbeiteten Retainers (2) zu entsprechen, da die passgenaue Form des Retainers (2) durch die Herausarbeitung alleine erreicht werden kann. Vorzugsweise ist das Rohstück (1) jedoch eine Standardplatte mit einer vorgegebenen Dicke und einer lateralen Ausdehnung, die grösser als diejenige des fertigten Retainer (2) ist (Figur 1).

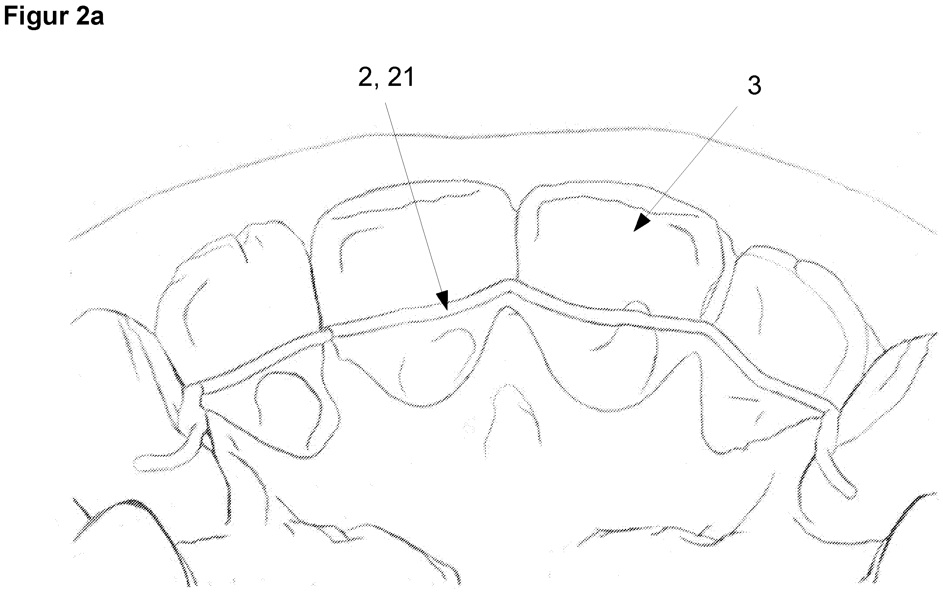

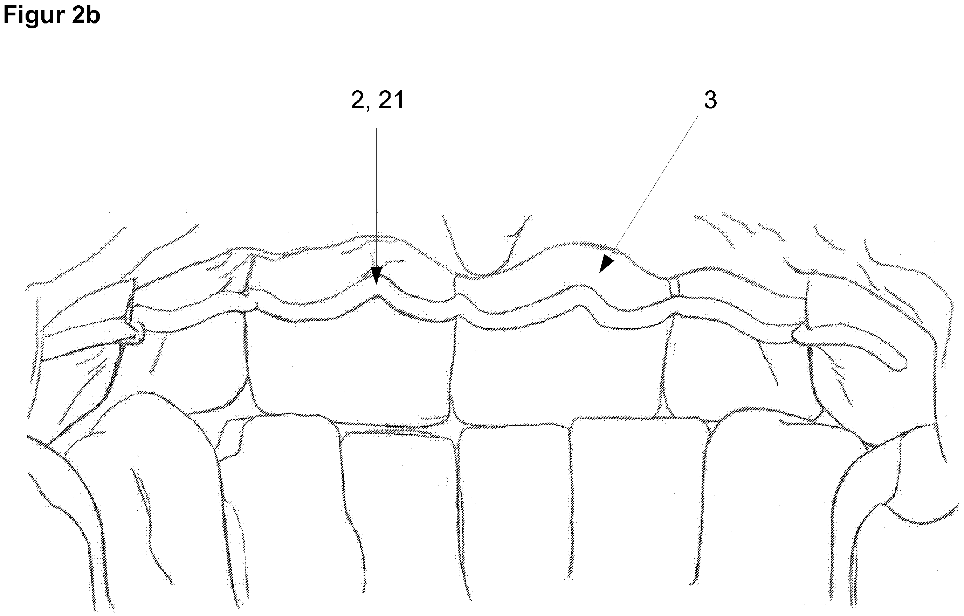

Der aus dem Rohstück (1) gefertigte dreidimensionale kieferorthopädische Retainer (2) weist mindestens eine längliche Stange (21) auf, welche zwei oder mehrere benachbarte Zähne (3) miteinander verbindet und stabilisiert (Figur 2a-b). Erfindungsgemäss ist vorgesehen, die Form und den Durchmesser des Retainers (2) individuell und fallspezifisch zu gestalten, damit er zumindest stellenweise an die genaue Form der anliegenden Zähne (3) eines Patienten angepasst ist. In der bevorzugten Ausführungsvariante weist der Retainer (2) dafür beliebige 3-dimensionale Formen auf und läuft entlang der lokalen Vertiefungen der Oberfläche des jeweiligen Zahns (3). Dies erlaubt eine optimale Platzierung des Retainers (2) auf dem Gebiss, was sowohl für die Funktion des Retainers (2) wie auch für die Bequemlichkeit des Trägers entscheidend ist. Einerseits muss für die Wirksamkeit des Retainers (2) die längliche Stange (21) genau auf die richtigen, vom Zahnarzt bestimmten Zonen der Zähne (3) einwirken und gleichzeitig okklusale Kontaktpunkte auch unter Berücksichtigung der Kiefergrenzbewegungen möglichst vermeiden. Andererseits ist es für die Bequemlichkeit des Trägers wichtig, dass der Retainer (2) von den Zähnen (3) so wenig wie möglich vorsteht und auf der gesamten Länge möglichst eng anliegt.

Ein zusätzliches wesentliches Merkmal des vorliegenden Retainers (2) ist seine Nano- bzw. Mikrostruktur, die identisch zur Nano- bzw. Mikrostruktur des Rohstücks (1) ist. Retainers (2) sind meist dünner als 1 Millimeter und müssen dennoch jahrelang den chemischen und physikalischen Belastungen im Mund standhalten. Das Mundmilieu ist feucht und warm, und während des Kauens werden Retainers (2) zahlreichen Druck-und Spannungszyklen ausgesetzt. Da die Eigenschaften eines Materials, insbesondere die Ermüdungsfestigkeit, wesentlich von seiner Nano- bzw. Mikrostruktur abhängig sind, ist es für die Lebensdauer des Retainers (2) entscheidend, dass die vom Hersteller des Rohstücks (1) erzielte ideale Nano- bzw. Mikrostruktur während des Herstellungsverfahrens bewahrt bleibt. Dies gilt für hoch entwickelte Materialien wie z.B. Formgedächtnislegierungen umso mehr. Formgedächtniseigenschaften basieren auf einer besonderen Anordnung der Atome in einem regelmässigen Muster, wobei Defekte wie Versetzungen und Verzwillingungen des Kristallgitters einen kritischen Einfluss haben. Erfindungsgemäss ist also vorgesehen, dass im Herstellungsverfahren des vorliegenden Retainers (2) die Nano- bzw. Mikrostruktur unberührt bleibt, damit keine zusätzlichen Defekte erzeugt werden.

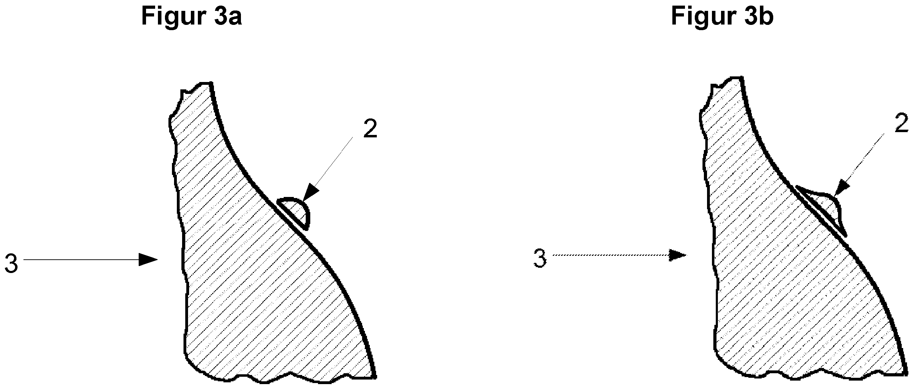

In einer möglichen Ausführungsvariante weist die längliche Stange (21) des Retainers (2) im Wesentlichen ein halbrundes Profil auf, wobei die ungefähr flache Seite des Profils dem jeweiligen Zahn (3) und die abgerundete Seite der Lippe (für einen Labial-Retainer (2)) oder der Zunge (für einen Lingual-Retainer (2)) zugewandt ist (Figur 3a). Somit weist der Retainer (2) einerseits eine stabile Kontaktfläche mit den Zähnen (3). Dies erlaubt einerseits eine optimale Befestigung an den Zähnen und weist andererseits eine zunge- bzw. lippenschonende Aussenfläche auf. In einer anderen Ausführungsvariante weist die längliche Stange (21) des Retainers (2) ein längliches Profil auf, die eine zulaufende Führungsfläche bildet (Figur 3b). Somit ist die Kontaktfläche zwischen dem Retainer (2) und den Zahn (3) noch grösser und der Retainer (2) noch fester am Zahn (3) verankert. Mit dem abgeflachten Profil steht der Retainer (2) auch weniger hervor, so dass er sich für den Träger bequemer anfühlt und weniger Anlass zum Hängenbleiben von Nahrungsmitteln in den Ecken zwischen dem Retainer (2) und dem Zahn (3) gibt. Diese Profilform ist zudem geeignet um z.B. auf Eckzähnen auslaufende Führungsflächen zu bilden.

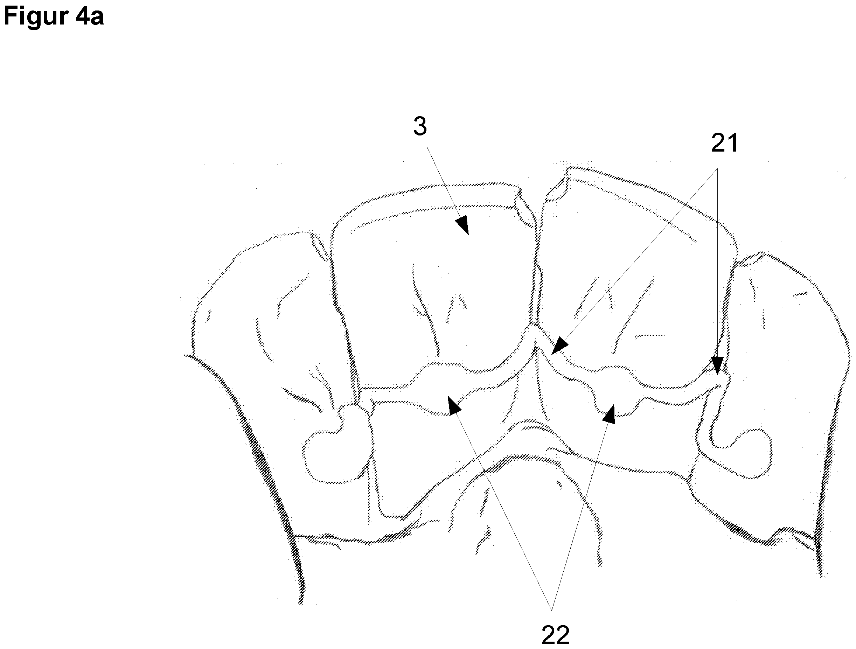

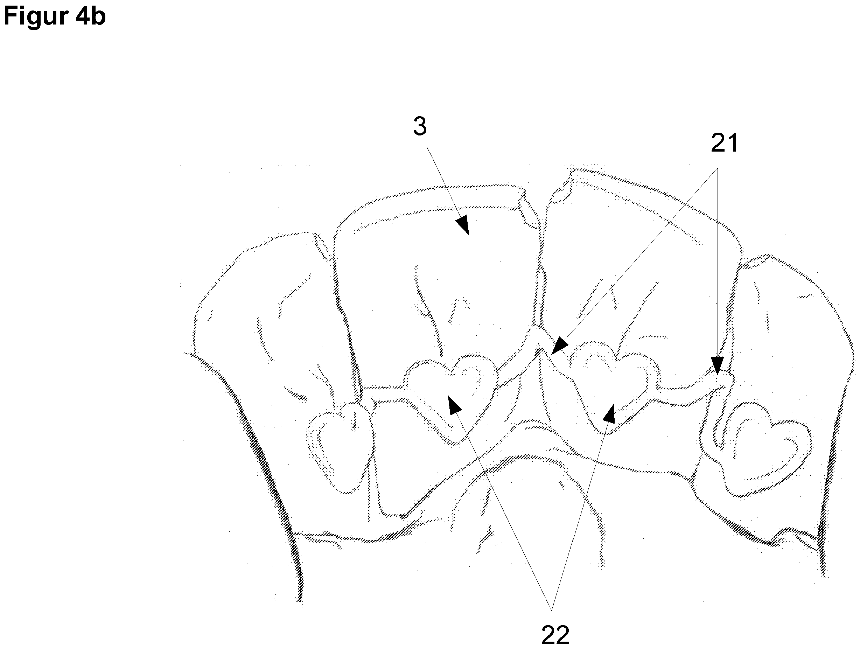

In einer möglichen Ausführungsvariante des Retainers (2) ist die mindestens eine längliche Stange (21) zusätzlich mit einem oder mehreren Befestigungselementen (22) versehen, die zur festen Verankerung der Stange (21) am Gebiss dienen (Figur 4a). Je nach Kundenwunsch oder Situationsanforderung können diese Befestigungselemente (22) beliebig gestaltet werden. In einer besonderen Ausführungsvariante des Retainers (2) sind die Befestigungselemente (22) ringförmig und werden um die Backenzähne angeordnet. In einer alternativen Ausführungsvariante sind die Befestigungselemente (22) Bereiche der länglichen Stange (21), welche eine grössere Kontaktfläche mit dem anliegenden Zahn (3) aufweisen. Dies erlaubt eine bessere Befestigung der Stange (21) an den Zähnen. In einer weiteren Ausführungsvariante können die Befestigungselemente (22) zu dekorativen oder spielerischen Zwecken eine fantasievolle Form einnehmen, beispielsweise für Kinder (Figur 4b).

Vorteilhaft kann der vorliegende Retainer (2) auch im Interdentalraum eine Schlaufe aufweisen, die es dem Patienten ermöglicht, die Zahnzwischenräume einfach mit Zahnseide zu reinigen. Zusätzlich können so Retentionen für die Verklebung geschaffen werden.

Der Retainer (2) kann je nach Kundenwunsch auch individuell eingefärbt werden. Auch hier sind Varianten und "Spielereien" möglich, die Kinder begeistern und das Einsetzten eines Retainers (2) weniger "tragisch" machen.

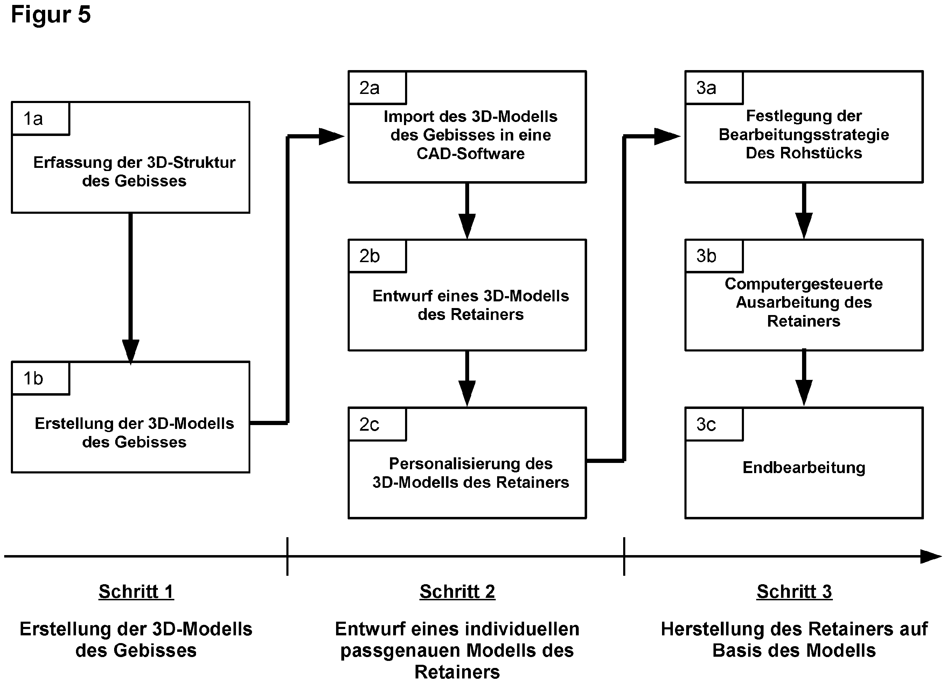

Grundlage der Erfindung ist ein Verfahren, welches erlaubt, einen dreidimensionalen kieferorthopädischen Retainer (2) gemäss obiger Beschreibung mit beliebigen dreidimensionalen Formen völlig individuell zu gestalten, wobei das Rohstück (1) nicht verformt wird, d.h., dass die Nano- bzw. Mikrostruktur im Rohstück (1) und im gefertigtem Retainer (2) unverändert dieselbe bleibt. Das erfindungsgemässe Verfahren besteht im Wesentlichen aus 3 Schritten (Figur 5):
1) Erstellung eines dreidimensionalen Modells der Struktur der Zähne (3) des Patienten
2) Entwurf eines individuellen passgenauen Modells für den Retainer (2)
3) Herstellung des Retainer (2) auf Basis des entworfenen 3D-Modells

In möglichen Ausführungsvarianten der Erfindung kann das Verfahren zu jedem dieser Schritte eine oder mehrere Teilaufgaben umfassen. Ein mögliches Verfahren für Schritt 1) ist:
1) Erstellung eines dreidimensionalen Modells der Struktur der Zähne (3) des Patienten:
   a) Erfassung der dreidimensionalen intraoralen Struktur
   b) Erstellung eines 3D-Modells des Gebisses

Schritt 2) kann eine oder mehrere der folgenden Teilaufgaben umfassen:
2) Entwurf eines individuellen passgenauen Modells des Retainers (2):
   a) Import des 3D-Modells des Gebisses in eine CAD-Software
   b) Entwurf eines 3D-Modells des Retainers (2) auf Basis des 3D-Modells des Gebisses
   c) Personalisierung des entworfenen 3D-Modells des Retainers (2)

Auch Schritt 3) kann eine oder mehrere der folgenden Teilaufgaben umfassen:
3) Herstellung des Retainer (2) auf Basis des entworfenen 3D-Modells:
   a) Festlegung der Bearbeitungsstrategie des Rohstücks (1)
   b) Computergesteuerte Herstellung des Retainers (2) aus dem Rohstück (1)
   c) Endbearbeitung

Im ersten Verfahrensschritt 1) wird zuerst die dreidimensionale intraorale Struktur erfasst, vorzugsweise mittels einem berührungslosen optischen bildgebenden Verfahren (Schritt 1a, Figur 5). Dies kann je nach Ausführungsvariante des Verfahrens unter Benutzung von extra-oralen oder intra-oralen Scanvorrichtungen erfolgen. Bei extra-oralen Scannvorrichtungen wie Röntgengeräten wird die dreidimensionale Struktur des Gebisses durch digitale Volumentomographie ermittelt. Intra-orale Scannvorrichtungen weisen eine Handsonde auf, die direkt in den Mund des Patienten eingeführt werden kann, und mit welcher die räumliche Struktur des Gebisses beispielsweise durch Konfokalmicroscopie, Photogrammetrie oder Interferometrie erfasst wird. Gegenüber der herkömmlichen dentalen Abdrucknahme mit Abformlöffel können diese optischen Verfahren wesentliche Vorteile aufweisen: Sie sind berührungslos, viel schneller und deutlich präziser. Ein optischer dentaler Abdruck mit Genauigkeit im Mikrometerbereich wird innert weniger Sekunden erfasst. Falls keine intra-orale Scannvorrichtung eingesetzt werden kann, besteht die Möglichkeit, zuerst eine klassische Abdrucknahme mit dem Abformlöffel vorzunehmen, und diesen Abdruck direkt negativ oder über ein daraus erstelltes positives Modell, z.B. aus Gips einzuscannen. Danach werden diesen Daten in ein 3D-Modell der Struktur der Zähne (3) des Patienten umgewandelt, oft mit einer mitgelieferten 3D-Visualisierungssoftware (Schritt 1b, Figur 5).

Im zweiten Verfahrensschritt 2) wird das erstellte 3D-Modell in eine CAD-Software importiert (Schritt 2a, Figur 5) und dient als Basis zum computergestützten Entwurf eines 3D-Modells für den Retainer (2) gemäss Zahnstruktur und zahnärztlicher Indikation mit den oben erwähnten vorteilhaften Merkmalen: passgenau, mit adaptiertem Profil, wenig hervorstehend unter Ausnützung der Vertiefungen der Oberfläche des jeweiligen Zahns (3), möglichst keine okklusale Kontaktpunkte berührend, usw. (Schritt 2b, Figur 5). Optional nach der Festlegung der Grundstruktur des Retainers (2) kann der entworfene Retainer (2) je nach Kundenwunsch zusätzlich personalisiert werden, beispielsweise mit einer fantasievollen Gestaltung der Stange (21) oder allfälliger Befestigungselemente (22) (Schritt 2c, Figur 5).

Im dritten Verfahrensschritt 3) wird der Retainer (2) auf Basis des entworfenen CAD-Modells produziert. Erfindungsgemäss ist vorgesehen, den Retainer (2) in seiner endgültigen Form durch computergesteuerte Abtragung von Material aus einem Rohstück (1) aus Metall, Hochleistungskeramik oder Kunststoff oder einem anderen biokompatiblen Material herauszuarbeiten. Alternativ kann auch durch computergesteuerte Auftragung von Rohmaterial (1) ein Retainer der endgültigen Form durch ein geeignetes adaptives Verfahren, wie z.B. Lasersintering oder 3D-Printing aus den selben Materialien erzeugt werden. Auch Materialkombinationen, sogenannte Composites, beispielsweise in PEEK (PolyEther Ether Ketone), können verwendet werden, wobei je nach Rohmaterial unterschiedliche Bearbeitungswerkzeuge gewählt werden können.

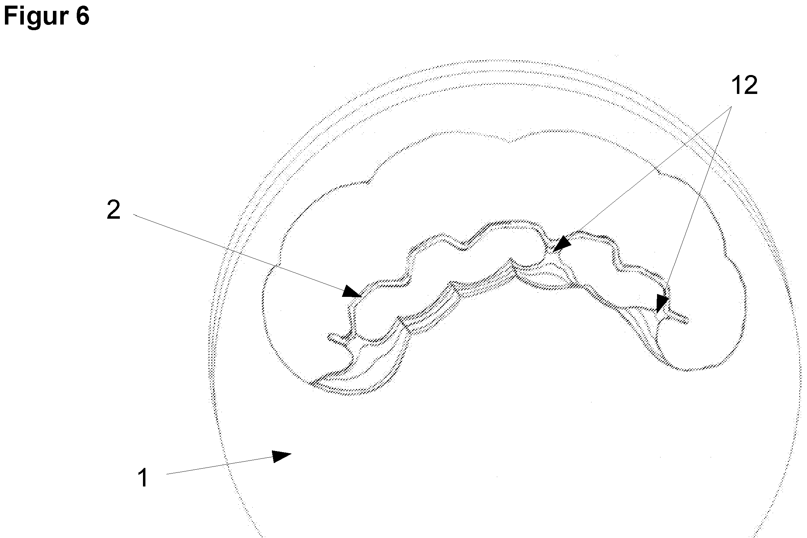

Besonders vorteilhaft ist das Verfahren anwendbar, wenn die Materialabtragung durch Mehrachsenbearbeitung des Materialstücks erfolgt, beispielsweise anhand einer mehrachsigen Fräse, Wasserstrahlschneidemaschine oder Laserschneidmaschine. Dafür wird zuerst die Bearbeitungsstrategie des Rohstücks (1) festgelegt (Schritt 3a. Figur 5). Einerseits wird unter Berücksichtigung der Geometrie des Rohstücks (1) derjenige Bereich des Rohstücks (1) bestimmt, welcher für die Bildung des Retainers (2) gemäss dem CAD-Modell vorgesehen ist, während das umliegende Material abzutragen ist (Figur 6). Die Geometrie des Rohstücks (1) wird idealerweise so gewählt, dass während der Ausarbeitung des Retainers (2) möglichst wenig Material verloren geht. Andererseits wird der genaue Ablauf der Ausarbeitung festgelegt und die Maschine entsprechend programmiert, insbesondere die Fräs- bzw. Schneidgeschwindigkeit, die Reihenfolge der benutzten Werkzeuge, die Haltepunkte und die Position der verbleibenden Anschlusspunkte (12) zwischen dem Retainer (2) und dem Rohstück (1) (Figur 6). Wichtig ist bei der Bearbeitung des Materialstücks, dass das verbleibende Material nicht verformt wird, um Eigenspannungen, Defekte wie Versetzungen und Verzwillingungen des Kristallgitters und Mikro-Risse im Material zu vermeiden. Aufgrund der geringen Dicke eines fertigen Retainers (2) ist dies allerdings mit den herkömmlichen Fräs- bzw. Schneidstrategien schwierig. Daher werden spezifische Fräs- bzw. Schneidstrategien eingesetzt werden, wie Sie zum Beispiel für die Herstellung von dünnwandigen elektronischen Komponenten entwickelt wurden. Die Grundsätze solcher Strategien sind in der Doktorarbeit von Herrn Michiel Gijsbrecht Roeland Popma ("Computer aided process planning for high-speed milling of thin-walled parts", Universiteit Twente, 2. Juni 2010) aufgeführt.

Erfindungsgemäss kann die Materialauftragung durch adaptive Verfahren wie, 3D-Printing oder Sintern oder Laser Melting erfolgen. Bei diesen Methoden liegt das Rohmaterial (1) in Form von Pulver oder Körnchen vor, welche eine bestimmte Nano- bzw. Mikrostruktur aufweisen und durch das 3D-Printing oder Sintern oder Laser Melting vollständig oder teilweise zusammengeschmolzen werden. Bei der Kühlung und Aushärtung der flüssigen Phase erlangt das Material wieder seine ursprüngliche Nano- bzw. Mikrostruktur vom festen Zustand. Wie bei der Materialabtragung weisen diese Methoden den Vorteil auf, dass der Retainer (2) direkt in seiner endgültigen Form hergestellt wird. Besonders wichtig ist, dass das Material des Retainers (2) im Herstellungsverfahren nicht verformt wird, um Eigenspannungen und Defekte wie Versetzungen und Verzwillingungen des Kristallgitters, sowie Mikro-Risse im Material zu vermeiden. Besonders vorteilhaft ist die Selective Laser Melting Methode, weil sie für die Herstellung von komplexen Gegenständen mit geringer Dicke gut geeignet ist. Die Grundsätze dieser Methode sind in der DE 19649865 erläutert.

Nach der computergesteuerten Ausarbeitung des Retainers (2) aus dem Rohstück (1) (Schritt 3b, Figur 5) kann eine zusätzliche Endbearbeitung nötig sein (Schritt 3c, Figur 5). Falls der herausgearbeitete Retainer (2) noch Anschlusspunkte (12) mit dem Rohstück (1) aufweist (Figur 6), müssen diese zuerst gelöst, und der Retainer (2) an diesen Stellen poliert werden. Dafür kann eine gewisse Handarbeit nötig sein. Um scharfe Kanten des Retainers (2) abzurunden, wird in einer möglichen Variante des Verfahrens der gesamte Retainer (2) zusätzlich poliert, entweder manuell oder elektrochemisch durch Einlegen in ein elektrolytisches Bad. Falls der Retainer (2) aus einer Titan-Legierung besteht, kann in einer weiteren Variante des Verfahrens das elektrolytische Bad auch zur Färbung des Retainers (2) dienen. Bei Anpassung der Eintauchzeit und der Stromstärke können dadurch beliebige Farben erreicht werden.

In einer Ausführungsvariante des vorliegenden Verfahrens findet nach der Endbearbeitung zusätzlich eine Kontrolle des fertigten Retainer statt, um sicherzustellen, dass er dem entworfenem 3D-Modell entspricht und somit die Erfordernisse der Passgenauigkeit erfüllt. Zum Beispiel könnte dafür die Geometrie des gefertigten Retainers unter Benutzung einer Scannvorrichtung erfasst, und mit dem vorgesehenen 3D-Modell verglichen werden. Alternativ könnte auch eine klassische Abdrucknahme des Zähne mit Abformlöffel vorgenommen werden und daraus ein Modell der Zähne (3) erstellt werden, beispielsweise aus Gips, womit die Passgenauigkeit des Retainers vor dem Einsatz im Mund des Patienten geprüft werden kann.

Das erfindungsgemässe Herstellungsverfahren weist viele Vorteile auf. Erstens wird ein Retainer (2) mit beliebiger dreidimensionaler Struktur aus einem Materialstück in einem einzigen Verfahrensschritt hergestellt, was viel einfacher, schneller und ökonomischer als die bisher bekannten Methoden ist. Zweitens erlaubt dieses Verfahren die Herstellung eines dreidimensionalen Retainers (2) ohne Verformung des Rohstücks (1). Der Retainer (2) wird also rein passiv hergestellt, d.h., dass er ausschliesslich aus unberührtem Material besteht, dessen ursprüngliche Nano- bzw. Mikrostruktur unverändert ist. Dadurch werden Eigenspannungen und nano- bzw. mikrostrukturelle Defekte im Retainer (2) vermieden, so dass die erhaltenen Retainers (2) stabiler sind und eine längere Lebensdauer aufweisen. Drittens erlaubt das erfindungsgemässe Verfahren die Herstellung eines Retainers mit hoher Passgenauigkeit und Bequemlichkeit für den Träger. Viertens besteht auch die Möglichkeit, den Retainer je nach Kundenwunsch zu personalisieren und fantasievoll zu gestalten.

## Patentansprüche

1. Dreidimensionaler kieferorthopädischer Retainer (2), welcher mindestens eine längliche Stange (21) aufweist, die an die genaue Form der anliegenden Zähne (3) angepasst ist und aus einem Rohstück (1) hergestellt wird, wobei die physikalischen Eigenschaften des Materials des verbleibenden Teils des Rohstücks (1) im Retainer unverändert sind, wobei der Retainer (2) auf unterschiedlichen Höhen zwischen der Basis und dem oberen Ende des Zahnschmelzes befestigbar ist,
**dadurch gekennzeichnet, dass**
der Retainer (2) im Wesentlichen ein halbrundes, zulaufendes Profil aufweist, wobei die flache Seite den Zähnen zugewandt ist, und
das Ausgangsmaterial des dreidimensionalen kieferorthopädischen Retainers ohne Verformung oder sonstige Veränderung der Materialeigenschaften direkt in die gewünschte Endform ausgearbeitet wurde.

2. Dreidimensionaler kieferorthopädischer Retainer (2) nach Anspruch 1,
**dadurch gekennzeichnet, dass**
die Nano- und Mikrostruktur des Retainers (2) der ursprünglichen Nano- und Mikrostruktur des Rohstücks (1) entsprechen.

3. Dreidimensionaler kieferorthopädischer Retainer (2) nach Anspruch 1,
**dadurch gekennzeichnet, dass**
der Retainer (2) mit einem oder mehreren Befestigungselementen (22) versehen ist, die zur festen Verankerung der Stange (21) an den Zähnen dienen,
wobei die Befestigungselemente (22) Bereiche der länglichen Stange (21) sind, welche eine grössere Kontaktfläche mit dem anliegenden Zahn (3) aufweisen.

4. Dreidimensionaler kieferorthopädischer Retainer (2) nach Anspruch 1,
**dadurch gekennzeichnet, dass**
der Retainer (2) im Interdentalraum eine Schlaufe aufweist.

5. Dreidimensionaler kieferorthopädischer Retainer (2) nach Anspruch 1,
**dadurch gekennzeichnet, dass**
der Retainer (2) eingefärbt ist.

6. Verfahren zur Herstellung eines dreidimensionalen kieferorthopädischen Retainers (2) nach Anspruch 1 aus einem Rohstück (1), welcher mindestens eine längliche Stange (21) aufweist, die an die genaue Form der anliegenden Zähne (3) angepasst ist, mit den folgenden Verfahrensschritten:
1) Erstellung eines dreidimensionalen Modells der Struktur der Zähne (3) des Patienten
2) Entwurf eines individuellen passgenauen Modells des Retainers (2)
3) Herstellung des Retainer (2) auf Basis des entworfenen 3D-Modells
**dadurch gekennzeichnet, dass**
im Rahmen des Verfahrensschritts 3) die physikalischen Eigenschaften des Materials des verbleibenden Teils des Rohstücks (1) im Retainer unverändert sind,
der Retainer aus dem Rohstück (1) durch computergesteuerte Abtragung von Material herausgearbeitet wird,
der Retainer (2) im Wesentlichen ein halbrundes, zulaufendes Profil aufweist, wobei die flache Seite den Zähnen zugewandt ist, und
das Ausgangsmaterial des dreidimensionalen kieferorthopädischen Retainers ohne Verformung oder sonstige Veränderung der Materialeigenschaften direkt in die gewünschte Endform ausgearbeitet wird.

7. Verfahren gemäss Anspruch 6,
**dadurch gekennzeichnet, dass**
die Abtragung von Material durch Fräsen erfolgt.

8. Verfahren gemäss Anspruch 6,
**dadurch gekennzeichnet, dass**
die Abtragung von Material durch Laser-Bearbeitung erfolgt.

9. Verfahren zur Herstellung eines dreidimensionalen kieferorthopädischen Retainers (2) nach Anspruch 1, welcher mindestens eine längliche Stange (21) aufweist, die an die genaue Form der anliegenden Zähne (3) angepasst ist, aus einem Rohmaterial (1), wobei der Retainer (2) auf unterschiedlichen Höhen zwischen der Basis und dem oberen Ende des Zahnschmelzes befestigbar ist, mit den folgenden Verfahrensschritten:
1) Erstellung eines dreidimensionalen Modells der Struktur der Zähne (3) des Patienten
2) Entwurf eines individuellen passgenauen Modells des Retainers (2)
3) Herstellung des Retainer (2) auf Basis des entworfenen 3D-Modells
**dadurch gekennzeichnet, dass**
der Retainer aus einem Rohmaterial (1) durch computergesteuerte Auftragung von Material, nämlich durch Sintern oder Laser Melting, hergestellt wird,
die physikalischen Eigenschaften des Retainers (2) nach dem Verfahrensschritt 3) mit den ursprünglichen physikalischen Eigenschaften des Rohmaterials (1) vor dem Verfahrensschritt 3) identisch sind,
der Retainer (2) im Wesentlichen ein halbrundes, zulaufendes Profil aufweist, wobei die flache Seite den Zähnen zugewandt ist, und
das Ausgangsmaterial des dreidimensionalen kieferorthopädischen Retainers direkt in die gewünschte Endform ausgearbeitet wird.

10. Verfahren gemäss Anspruch 6 oder 9,
**dadurch gekennzeichnet, dass**
im Rahmen des Verfahrensschritts 3) der Retainer (2) elektrochemisch poliert wird.

11. Verfahren gemäss Anspruch 6 oder 9,
**dadurch gekennzeichnet, dass**
der Retainer (2) aus Titan oder einer Titan-Legierung besteht.

12. Verfahren gemäss Anspruch 11,
**dadurch gekennzeichnet, dass**
die Titan-Legierung Ti-6AL-4V ist

13. Verfahren gemäss Anspruch 11,
**dadurch gekennzeichnet, dass**
die Titan-Legierung ein Formgedächtnismaterial ist.

## Claims

1. Three-dimensional orthodontic retainer (2) having at least one elongated wire (21) adjusted to the exact shape of the adjacent teeth (3) and produced from a raw piece (1), wherein the physical properties of the material of the remaining part of the raw piece (1) are unchanged in the retainer, wherein the retainer (2) is attachable at different heights between the base and the upper end of the tooth enamel,
**characterised in that**
the retainer (2) has a substantially semicircular tapered profile with the flat side facing the teeth, and
the starting material of the three-dimensional orthodontic retainer was processed directly into the desired final shape without deformation or any other change in the material properties.

2. Three-dimensional orthodontic retainer (2) according to claim 1,
**characterised in that**
the nano- and microstructure of the retainer (2) correspond to the original nano- and microstructure of the raw piece (1).

3. Three-dimensional orthodontic retainer (2) according to claim 1,
**characterised in that**
the retainer (2) is provided with one or more fastening elements (22) which serve to firmly anchor the wire (21) to the teeth,
the fastening elements (22) being portions of the elongate wire (21) which have a larger contact area with the adjacent tooth (3).

4. Three-dimensional orthodontic retainer (2) according to claim 1,
**characterised in that**
the retainer (2) has a loop in the interdental space.

5. Three-dimensional orthodontic retainer (2) according to claim 1,
**characterised in that**
the retainer (2) is colored.

6. Method for producing of a three-dimensional orthodontic retainer (2) according to claim 1 from a raw piece (1) which has at least one elongated wire (21) adjusted to the exact shape of the adjacent teeth (3), with the following steps :
1) Creation of a three-dimensional model of the structure of the patient's teeth (3).
2) Design of an individually fitting model of the retainer (2)
3) Manufacture of the retainer (2) based on the designed 3D model
**characterised in that**
during step 3), the physical properties of the material of the remaining part of the raw piece (1) are unchanged in the retainer,
the retainer is machined from the raw piece (1) by computer-controlled removal of material,
the retainer (2) has a substantially semicircular tapered profile with the flat side facing the teeth, and
the starting material of the three-dimensional orthodontic retainer is processed directly into the desired final shape without deformation or any other change in the material properties.

7. The method according to claim 6,
**characterised in that**
material is removed by milling.

8. The method according to claim 6,
**characterised in that**
material is removed by laser processing.

9. Method for producing a three-dimensional orthodontic retainer (2) according to claim 1, comprising at least one elongate wire (21) adjusted to the exact shape of the adjacent teeth (3), from a raw material (1),
wherein the retainer (2) can be fixed at different heights between the base and the upper end of the tooth enamel, with the following steps:
1) Creation of a three-dimensional model of the structure of the patient's teeth (3).
2) Design of an individually fitting model of the retainer (2)
3) Manufacture of the retainer (2) based on the designed 3D model
**characterised in that**
the retainer is produced from a raw material (1) by computer-controlled application of material, namely by sintering or laser melting,
the physical properties of the retainer (2) after step 3) are identical to the original physical properties of the raw material (1) before step 3),
the retainer (2) has a substantially semicircular tapered profile with the flat side facing the teeth, and
the starting material of the three-dimensional orthodontic retainer is processed directly into the desired final shape.

10. The method according to claim 6 or 9,
**characterised in that**
as part of method step 3), the retainer (2) is polished electrochemically.

11. The method according to claim 6 or 9,
**characterised in that**
the retainer (2) consists of titanium or a titanium alloy.

12. The method according to claim 11,
**characterised in that**
the titanium alloy is Ti-6AL-4V.

13. The method according to claim 11,
**characterised in that**
the titanium alloy is a shape memory material.

## Revendications

1. Contention orthodontique tridimensionnelle (2) ayant au moins une tige allongée (21) ajustée à la forme exacte des dents adjacentes (3) et réalisée à partir d'une pièce brute (1), dans laquelle les propriétés physiques du matériau de la partie restante de la pièce brute (1) sont inchangées dans la contention, la contention (2) pouvant être fixée à différentes hauteurs entre la base et l'extrémité supérieure de l'émail dentaire,
**caractérisée en ce que**
la contention (2) a un profil sensiblement semi-circulaire effilé avec le côté plat faisant face aux dents, et
le matériau de départ de la contention orthodontique tridimensionnelle a été travaillé directement dans la forme finale souhaitée sans déformation ni autre modification des propriétés du matériau.

2. Contention orthodontique tridimensionnelle (2) selon la revendication 1,
**caractérisée en ce que**
la nanostructure et la microstructure de la contention (2) correspondent à la nanostructure et à la microstructure d'origine de la pièce brute (1).

3. Contention orthodontique tridimensionnelle (2) selon la revendication 1,
**caractérisée en ce que**
la contention (2) est pourvue d'un ou plusieurs éléments de fixation (22) qui servent à ancrer solidement la tige (21) aux dents,
les éléments de fixation (22) étant des régions de la tige allongée (21) ayant une plus grande surface de contact avec la dent adjacente (3).

4. Contention orthodontique tridimensionnelle (2) selon la revendication 1,
**caractérisée en ce que**
la contention (2) présente une boucle dans l'espace interdentaire.

5. Contention orthodontique tridimensionnelle (2) selon la revendication 1,
**caractérisée en ce que**
la contention (2) est colorée.

6. Procédé de fabrication d'une contention orthodontique tridimensionnelle (2) selon la revendication 1 à partir d'une pièce brute (1), comportant au moins une tige allongée (21) qui est ajustée à la forme exacte des dents adjacentes (3), avec les étapes suivantes :
1) Création d'un modèle tridimensionnel de la structure des dents du patient (3)
2) Dessin d'un modèle individuel de contention (2)
3) Fabrication de la contention (2) sur la base du modèle 3D conçu
**caractérisé en ce que**
au cours de l'étape 3 du procédé, les propriétés physiques du matériau de la partie restante de la pièce brute (1) sont inchangées dans la contention,
la contention est usinée à partir de la pièce brute (1) par enlèvement de matière commandé par ordinateur,
la contention (2) a un profil sensiblement semi-circulaire effilé avec le côté plat faisant face aux dents, et
le matériau de départ de la contention orthodontique tridimensionnelle est travaillé directement dans la forme finale souhaitée sans déformation ni autre modification des propriétés du matériau.

7. Procédé selon la revendication 6,
**caractérisé en ce que**
la matière est enlevée par fraisage.

8. Procédé selon la revendication 6,
**caractérisé en ce que**
la matière est enlevée par traitement au laser.

9. Procédé de fabrication d'une contention orthodontique tridimensionnelle (2) selon la revendication 1, comprenant au moins une tige allongée (21) ajustée à la forme exacte des dents adjacentes (3), à partir d'un matériau brut (1),
dans lequel la contention (2) peut être fixée à différentes hauteurs entre la base et l'extrémité supérieure de l'émail dentaire, avec les étapes suivantes :
1) Création d'un modèle tridimensionnel de la structure des dents du patient (3).
2) Dessin d'un modèle individuel de contention (2)
3) Fabrication de la contention (2) sur la base du modèle 3D conçu
**caractérisé en ce que**
la contention est réalisée à partir d'un matériau brut (1) par application de matière commandée par ordinateur, à savoir par frittage ou fusion laser,
les propriétés physiques de la contention (2) après l'étape 3) sont identiques aux propriétés physiques d'origine du matériau brut (1) avant l'étape 3),
la contention (2) a un profil sensiblement semi-circulaire effilé avec le côté plat faisant face aux dents, et
le matériau de départ de la contention orthodontique tridimensionnelle est directement travaillé dans la forme finale souhaitée.

10. Procédé selon la revendication 6 ou 9,
**caractérisé en ce que**
dans le cadre de l'étape 3 du procédé, la contention (2) est polie électrochimiquement.

11. Procédé selon la revendication 6 ou 9,
**caractérisé en ce que**
la contention (2) est en titane ou en un alliage de titane.

12. Procédé selon la revendication 11,
**caractérisé en ce que**
l'alliage de titane est Ti-6AL-4V.

13. Procédé selon la revendication 11,
**caractérisé en ce que**
l'alliage de titane est un matériau à mémoire de forme.
